# EUROPÄISCHE PATENTANMELDUNG

(11) **EP 4 470 439 A1**
(43) Veröffentlichungstag der Anmeldung: **04.12.2024**
(21) Anmeldenummer: 24179090.6
(22) Anmeldetag: 30.05.2024
(51) Int. Cl.: A47L 11/24, A47L 11/40

(54) **VERFAHREN UND VORRICHTUNG ZUR AUTOMATISIERTEN ENTLEERUNG VON LOSEM TRANSPORTGUT AUS EINEM BEHÄLTER**

(30) Priorität: 31.05.2023 DE 102023114348
(71) Anmelder: ADLATUS Robotics GmbH, 89079 Ulm (DE)
(72) Erfinder: Christian, Häußler, 89233 Neu-Ulm (DE); Hochdorfer, Siegfried, 88471 Untersulmetingen (DE)
(74) Vertreter: Meyer, Thorsten

(57) **Zusammenfassung**

Die Erfindung schlägt ein Verfahren zur automatisierten Entleerung von losem Transportgut aus einem Behälter, das vermittels eines selbstfahrenden Fahrzeugs transportiert wird, in einen Auffangbehälter, vor bei dem die Entladung in einer räumlich definierten Entladezone in einer Entladestation erfolgt. Des weiteren ist eine Entladestation zur automatisierten Entleerung nach dem Verfahren vorgeschlagen.

## Beschreibung

Die Erfindung betrifft einen Prozess zur sicheren und automatisierten Entleerung eines Kehrgutbehälters eines Reinigungsroboters in einer dafür geeigneten Servicestation.

Aufgabe der Erfindung ist es, einen Prozess zur Verfügung zu stellen, welcher einen autonomen Reinigungsablauf so erweitert, dass auch die Entleerung des Kehrgutbehälters des Reinigungsroboters automatisch erfolgen kann. Des weiteren ist es Aufgabe eine entsprechende Vorrichtung zur Verfügung zu stellen.

Diese Aufgabe wird durch einen Prozess zur Entleerung nach den Merkmalen des Anspruchs 1 und eine Vorrichtung nach den Merkmalen des Anspruchs 5 gelöst.

Erfindungsgemäß ist ein Verfahren vorgesehen, das die automatisierte Entleerung des Kehrgutbehälters in einer Servicestation ermöglicht, während alle Risiken, die sich aus den dazu erforderlichen Bewegungen ergeben, durch eine inhärent sichere Konstruktion und/oder geeignete technische Schutzmaßnahmen auf ein akzeptables Niveau gemindert werden.

Erfindungsgemäß wird ein Verfahren vorgestellt, das im Zusammenspiel mit einer für diesen Zweck entwickelten Vorrichtung eine Überladung von Kehrgut aus einem Reinigungsroboter in einen Auffangbehälter ermöglicht, ohne dass sich aus dem Vorgang und den damit verbunden Bewegungen des Roboters und der an diesem angebrachten Anbauteile eine Gefährdung für Personen ergibt.

So schlägt das Verfahren zur automatisierten Entleerung von losem Transportgut aus einem Behälter, das vermittels eines selbstfahrenden Fahrzeugs transportiert wird, in einen Auffangbehälter, nach Anspruch 1 die folgenden Schritte vor, Zunächst Bereitstellen einer räumlich definierten Entladezone in einer Entladestation, die das selbstfahrende Fahrzeug wenigstens an einer Seite durch trennende Schutzeinrichtungen aufzunehmen vermag und wenigstens in Teilbereichen umgibt, wobei hierbei von Vorteil eine Stirnseitenbegrenzung und Seitenbegrenzungen vorgesehen sind. Dann in einem weiteren Schritt Sensieren der Entladezone vermittels an dem selbstfahrenden Fahrzeug vorgesehenen Sensoren.

Worauf im nächsten Schritt erfolgt: Bewerten der Sensordaten zu einer Verfügbarkeitssituation der Entladezone und bei ermittelter Leere der Entladezone Einfahren des selbstfahrenden Fahrzeugs in diese in eine definierte Position zur erwarteten Lage des Auffangbehälters, wobei das Einfahren insbesondere unter Einhaltung eines vorgegebenen Abstands zu den Seitenwänden und der Stirnseitenwand erfolgen kann. Hierdurch werden definierte Sicherheitsabstände ermöglicht.

Im weiteren Verfahrensschritt: Anheben des Behälters und verschwenken desselben vermittels einer Verschwenkvorrichtung über den Auffangbehälter und Entleeren des Behälters.

Wobei mehrfaches Sensieren der Entladezone während des Anhebe- und Entleerungsvorgangs vermittels der an dem selbstfahrenden Fahrzeug vorgesehenen Sensoren nach einem weiteren Schritt erfolgt, und stoppen jeder Bewegung bei Feststellung einer Abweichung mit Ausnahme des selbstfahrenden Fahrzeugs vom sonst leeren Zustand der Entladezone.

Weiterer Schritt: Zurückbewegen des Behälters durch die Verschwenkvorrichtung.

Nach einer vorteilhafter Ausgestaltung des Verfahrens ist vorgesehen, dass als Behälter insbesondere ein Kehrgutbehälter gewählt wird und das Transportgut ein insbesondere loses Kehrgut ist, das von dem als Reinigungsroboter ausgebildeten selbstfahrenden Fahrzeug in einem Reinigungsprozess aufgenommen und dann transportiert wurde, wobei der Auffangbehälter insbesondere als eine standardisierte Mülltonne gewählt wird.

Ein weiterer bevorzugter Verfahrensschritt sieht vor, dass das Sensieren der Entladezone vermittels an dem selbstfahrenden Fahrzeug vorgesehenen Sensoren durch wenigstens zu einer Seite der Entladestation unter Feststellung deren Linienzugs insbesondere vermittels 2D-Laserscannern erfolgt, hierbei wird die mittels Sensierung festgestellte Kontur der Entladezone mit einer gespeicherten zu erwartenden leeren Kontur verglichen und entsprechend eine Verfügbarkeitssituation positiv festgestellt, wenn keine Abweichungen vorliegen, insbesondere wird dieser Vorgang mehrfach wiederholt.

Ein weiterer nicht weniger vorteilhafter Verfahrensschritt sieht vor, dass neben der Entleerung des Kehrgutbehälters die Aufladung der Akkumulatoren des Reinigungsroboters durch eine Ladevorrichtung ermöglicht ist, hierzu ist es vorgesehen nach der Entleerung des Kehrgutbehälters, den Roboter in der Parkposition zu belassen, in welcher vorteilhafterweise die Aufladung stattfindet.

Nach dem zweiten Aspekt der Erfindung ist eine Entladestation zur automatisierten Entleerung von losem Transportgut aus einem Behälter eines selbstfahrenden Fahrzeugs in einen Auffangbehälter, insbesondere nach einem Verfahren der Ansprüche 1 bis 4, vorgeschlagen, die sich dadurch auszeichnet, dass das selbstfahrende Fahrzeug ein Reinigungsroboter ist, der einen mitgeführten Behälter in einem Reinigungsprozess mit Kehrgut befüllt,
wobei an der Entladestation der Auffangbehälter in einer definierten Position gehalten ist, und der Reinigungsroboter an den Auffangbehälter in einer räumlich definierten Entladezone heranfahren kann,
wobei die definierten Entladezone durch eine Fläche, die an wenigstens einer Seite durch trennende Schutzeinrichtungen, insbesondere in Form eines Zauns oder einer Trennwand, durch eine Stirnseitenbegrenzung und Seitenbegrenzungen begrenzt ist, definiert ist.

Das Verfahren ermöglicht in einer weiteren Ausführungsform, sowohl die Entleerung des Kehrgutbehälters als auch die Aufladung der Akkumulatoren des Reinigungsroboters einzeln und unabhängig voneinander durchzuführen. Es ist hierzu vorgesehen nach der Entleerung des Kehrgutbehälters, den Roboter in der Parkposition zu belassen, in welcher vorteilhafterweise die Aufladung stattfindet.

Um eine einfache Entleerung des Auffangbehälters in der Servicestation zu ermöglichen, wird dieser von Vorteil als standardisierte Mülltonne ausgeführt.

Der Kehrgutbehälter im Reinigungsroboter ist funktional bodennah platziert, um die Aufnahme von Grob- und Feinschmutz zu erleichtern.

Sowohl der Auffangbehälter als auch der Reinigungsroboter befinden sich in der Servicestation auf Bodenhöhe, um die baulichen Maßnahmen zur Inbetriebnahme des Prozesses möglichst gering zu halten.

Aus der Positionierung von Auffangbehälter und Kehrgutbehälter ergibt sich die Notwenigkeit, den Kehrgutbehälter zu Entleerung anzuheben, um dessen Inhalt in den Auffangbehälter zu entleeren.

Insbesondere aus dem Vorgang des Anhebens ergeben sich verschiedene Risiken, da der Hubmechanismus zwangsläufig verschiedene Quetsch- und Scherstellen bietet. Weiter ergeben sich auch am Kehrgutbehälter, der zur Leerung geöffnet werden muss, funktionsbedingt Quetschstellen. Erfindungsgemäß werden diese Risiken durch eine inhärent sichere Konstruktion und/oder technische Maßnahmen ausreichend gemindert.

Zur Risikominderung ist die Servicestation aus mehreren Schutzzaunelementen oder anderen vergleichbaren trennenden Schutzeinrichtungen aufgebaut, die ein Eingreifen in die beweglichen Teile verhindern.

Um sicherzustellen, dass sich keine Personen innerhalb der Servicestation aufhalten, wenn der Reinigungsroboter in diese einfährt, werden weitere technische Maßnahmen ergriffen, die den Gefahrenbereich überwachen.

Eine Ausführungsform des Prozesses bietet einen Freiraum zwischen den Seiten des Reinigungsroboters und den trennenden Schutzeinrichtungen, der sicherstellt, dass sich eine Person zum Starten des Geräts in die Servicestation bewegen kann.

Unabhängig von der Breite des Reinigungsroboters und der zugehörigen Servicestation lässt sich mit der Erfindung sicherstellen, dass zu keinem Zeitraum eine Gefährdung für Personen besteht.

Um sicherzustellen, dass sich keine Objekte innerhalb der Servicestation befinden, bevor der Reinigungsroboter in diese einfährt, wird deren Kontur auf Abweichungen von einem hinterlegten Modell geprüft. Der Prozess sieht diesen Abgleich zu mehreren Zeitpunkten vor, um auch Kollisionen mit nichtstationären Hindernissen sicher zu vermeiden.

Der Konturenabgleich wird dabei beispielsweise mit einem oder mehreren 2D-Laserscannern durchgeführt, welche die geforderten Funktionen mit einem ausreichend hohen Performance Level abbilden.

Während des Reinigungsbetriebs setzt der Reinigungsroboter Sensoren ein, die beispielsweise durch die Einrichtung von Schutzfeldern Kollisionen mit Personen sicher verhindern. Da sich insbesondere während dem Entleeren des Kehrgutbehälters die Außenkontur des Reinigungsroboters deutlich vergrößert und sich dessen Kontur mit der des Auffangbehälters überschneiden muss, ist der erfindungsgemäße Prozess erforderlich, um zu jedem Zeitpunkt eine Gefährdung für Personen auszuschließen.

Der Reinigungsroboter befindet sich zum Start des Prozesses in einer exakt definierten Position vor der Servicestation. Diese fährt er beispielsweise auf Basis von Lokalisierungsdaten oder anderen Merkmalen an, welche durch Sensoren erfasst werden.

Durch eine inhärent sichere Konstruktion wird sichergestellt, dass sich im Bereich, in dem der Auffangbehälter platziert ist, keine Person aufhält. Diese ist durch eine zusätzliche trennende Schutzreinrichtung von der Parkposition des Reinigungsroboters abgetrennt.

Auf der Position vor der Servicestation stehend lässt sich durch die optischen Sensoren des Reinigungsroboters der gesamte befahrbare Bereich dieser einsehen. Durch einen Abgleich der sichtbaren Kontur der Seiten- und Zwischenwand mit einem zuvor definierten Linienzug wird die Prüfung auf Hindernisse innerhalb des Gefahrenbereichs durchgeführt. Dabei sind der Präzision der Positionen des Roboters entsprechend große Toleranzen einzuhalten. Diese dürfen nur so groß gewählt sein, dass eine Person unabhängig von ihrem Standort zuverlässig erkannt wird.

Diese Information wird so lange gespeichert, bis entweder der Dockingprozess beendet wird oder eine Verletzung der nachfolgend beschriebenen Konturen erfolgt.

Durch den ersten Abgleich der Kontur mit wenigstens einer Seite wird sichergestellt, dass sich vor dem Losfahren des Reinigungsroboter keine Personen im Gefahrenbereich befinden. Anschließend bewegt sich dieser vorwärts oder rückwärts in die Servicestation. Dabei wird der Abstand zu den Seitenwänden konstant gehalten. Deren Kontur wird weiterhin sicher überwacht, um auszuschließen, dass sich Personen während des einfahren in die Servicestation in den Gefahrenbereich bewegen. Die Überwachung der Zwischenwand entfällt, da sich deren Kontur relativ zum Reinigungsroboter verändert.

Zur Entleerung des Kehrgutbehälters wird dieser angehoben.

Insbesondere während dieses Schrittes wird durch die Konturenüberwachung sichergestellt, dass Personen auch durch ein Übergreifen der überwachten Bereiche keinen Zugriff auf die Quetschstellen im Bereich der Hubmechanik haben.

Die Position des Kehrgutbehälters wird beispielsweise über einen Kontaktsensor überwacht. Alternativ kann auch ein Encoder zur genauen Detektion dessen Position eingesetzt werden. Sobald sich der Kehrgutbehälter an einer anderen, als der Ausgangsposition befindet, ist ein Wechseln in den Reinigungsbetrieb und ein Bewegen außerhalb der Servicestation nicht mehr möglich. Tritt während der Entleerung eine Störung auf, ist diese beispielsweise durch einen manuellen Eingriff zu beseitigen. Anschließend kann der Kehrgutbehälter zum Beispiel unter Beobachtung einer qualifizierten Person zurück in die Ausgangsposition bewegt werden.

Auf die Hubbewegung folgt ein Verfahren des Reinigungsroboters in eine Position, in der sich der Kehrgutbehälter zur Leerung über dem Auffangbehälter befindet. Nach Erreichen der Position wird der Inhalt des Kehrgutbehälter beispielsweise durch das Öffnen einer Klappe in den Auffangbehälter befördert. Nach der Leerung wird der Kehrgutbehälter wieder vorschlossen oder anderweitig zur nächsten Befüllung vorbereitet.

Nach dem Entleeren des Kehrgutbehälters bewegt sich der Reinigungsroboter wieder auf eine weiter vorne in der Servicestation liegende Position, in der der Kehrgutbehälter zurück in seine Ausgangslage bewegt werden kann. Auch während diesem Schritt bleibt die Konturenüberwachung der Seitenwände aktiv, um eine Gefährdung von Personen auszuschließen.

Für alle weiteren Fahrmanöver wird die Konturenüberwachung deaktiviert und wieder die Überwachung der beispielsweise auch im Reinigungsbetrieb verwendeten Schutzfelder aktiviert. Diese verhindern sicher eine Kollision zwischen der Außenkontur des Reinigungsroboters und Personen.

Je nach Ausführungsform des Prozesses lassen sich nach der Entleerung des Kehrgutbehälters verschiedene Aufgaben erfüllen. Eine weitere Ausführungsform sieht das Aufladen der Akkumulatoren im Anschluss an die Entleerung vor. Dazu bewegt sich der Reinigungsroboter in eine Position, in der in ihm befestigte Ladekontakte eine Verbindung zu einer in der Servicestation verbauten Ladeelektronik herstellen. Dazu kann alternativ auch eine berührungslose Ladetechnik verwendet werden, bei der die Akkumulatoren induktiv geladen werden.

Die Bewegung zu der Ladeposition wird dabei so gestaltet, dass durch die Komponenten der Servicestation keine Verletzung der Schutzfelder erfolgt. Vorteilhaft wirkt sich dies aus, da in diesem Modus keine gesonderte Betriebsart der Sicherheitssteuerung ausgewählt werden muss und keine Daten zu vorherigen Zuständen mehr gespeichert werden müssen.

Vorteilhafterweise besteht auch die Möglichkeit wahlweise mehrere oder alle Komponenten des Reinigungsroboters während des Ladevorgangs auszuschalten, um dessen Energieverbrauch zu reduzieren. Der Prozess sieht zu diesem Zeitpunkt keine dauerhafte Überwachung von Konturen oder Schutzfeldern vor, da keine Bewegung stattfindet. Daher ist auch keine Speicherung von Informationen über deren Zustand erforderlich, die nach einem Ausschalten von Komponenten möglicherweise nicht mehr bereitsteht.

Nach dem Abschluss des Ladevorgangs oder nach Anforderung einer Reinigungsaufgabe kann der Reinigungsroboter manuell und/oder automatisch wieder eingeschaltet werden. Daraufhin verlässt dieser die Servicestation unter Beibehalten alle Schutzmaßnahmen, die auch im Reinigungsbetrieb bestehen.

Eine weitere Ausführungsform sieht den direkten Start eines Reinigungsprogramms nach der Entleerung des Kehrgutbehälters vor. Dazu verlässt der Reinigungsroboter die Servicestation und arbeitet eine vorgegebene Reinigungsaufgabe ab. In diesem Fall sind sich von den Schutzmaßnahmen während des Reinigungsbetriebs unterscheidenden Schutzmaßnahmen erforderlich.

Während aller Schritte wird die Position des Reinigungsroboters beispielsweise durch den Iterative Closest Point Algorithmus relativ zur Servicestation bestimmt und die Fahrmanöver entsprechend angepasst, um alle Zielpositionen anzufahren.

Zur Sicherstellung einer entsprechend hohen Verfügbarkeit aller Sicherheitssysteme im Störungsfall kann die Überwachung aller Konturen- und Schutzfeldüberwachungen auf eine separate Steuerung ausgelagert werden. Diese erhält vom Hauptrechner des Reinigungsroboters Informationen über die angeforderten Bewegungen und hat zu jedem Zeitpunkt die Möglichkeit, diese sicher Abzuschalten. Alle Lokalisierungs- und Kinematik-Berechnungen werden funktionsorientiert auf einem Hauptrechner ausgeführt, dessen Ausfallwahrscheinlichkeit höher sein kann als die der sicherheitsgerichteten Steuerung.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung eines Reinigungsroboters in einer Servicestation,
- Fig. 2: eine schematische Darstellung eines Reinigungsroboters mit angehobenem Kehrgutbehälter in einer Servicestation,
- Fig. 3: eine schematische Darstellung der zu überwachenden Kontur 1, und
- Fig. 4: eine schematische Darstellung der zu überwachenden Kontur 2,
- Fig. 5: eine schematische Darstellung einer Person im Gefahrenbereich nach dem Anheben des Kehrbehälters,
- Fig. 6: Schematische Darstellung einer Person im Gefahrenbereich vor dem Anheben des Kehrgutbehälters,
- Abb. 7: Schematische Darstellung der drei Bereiche, in denen der Roboter während seines Einsatzes arbeitet.

Die in den Figuren gleichen Bezugsziffern bezeichnen gleiche oder gleich wirkende Elemente.

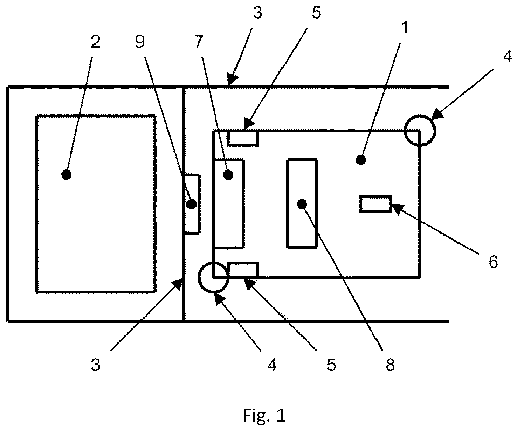

In Fig. 1 ist eine schematische Darstellung der Draufsicht einer möglichen Ausführungsform der zur Abbildung des erfindungsgemäßen Prozesses erforderlichen Servicestation gemeinsam mit einem in dieser platzierten Reinigungsroboter 1 dargestellt. Dieser ist als Kehrroboter, welcher neben zwei mitlaufenden Rädern 5 über ein angetriebenes und gelenktes Rad 6 verfügt. Der aufgenommene Schmutz wird von der Kehrwalze 8 in den Kehrgutbehälter 7 befördert. Zur Absicherung des Gefahrenbereichs sind exemplarisch zwei Laserscanner 4 angebracht.

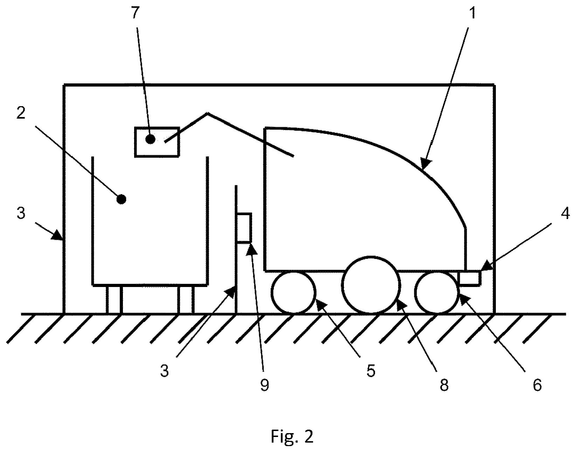

In Fig. 2 ist die Seitenansicht eines Reinigungsroboters 1 in einer Servicestation zum Zeitpunkt der Entleerung des Kehrgutbehälters in den Auffangbehälter dargestellt. Die Servicestation ist dabei aus mehreren trennenden Schutzeinrichtungen 3 aufgebaut und beinhaltet einen Auffangbehälter 2 sowie die zur Aufladung erforderliche Technik 9.

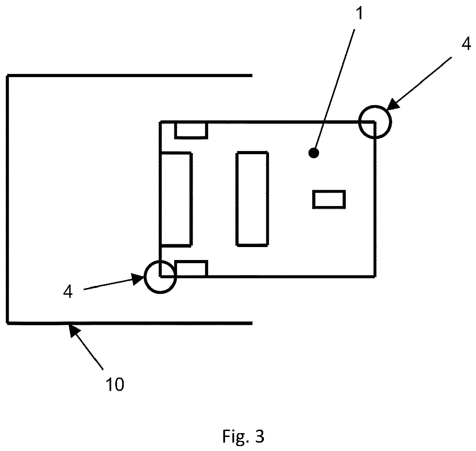

In Fig. 3 ist die vor der Bewegung des Kehrgutbehälters von den optischen Sensoren zu erkennende Kontur 10 dargestellt, die sicherstellt, dass sich keine Personen innerhalb des Gefahrenbereichs in der Servicestation befinden, bevor die Bewegung des Kehrgutbehälters gestartet wird. Diese wird von der Laserscannern 4 überwacht.

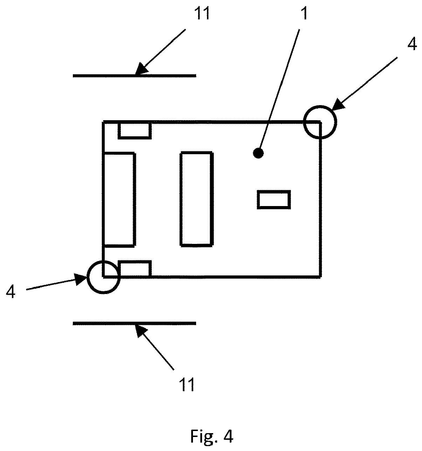

In Fig. 4 ist die nach der Prüfung von Kontur 1 (10) zu überwachende Kontur 2 (11) dargestellt. Durch deren Überwachung kann während dem Anheben des Kehrgutbehälters und während der Bewegung des Reinigungsroboters mit angehobenem Kehrgutbehälter in die Servicestation sichergestellt werden, dass alle Bewegungen sofort abgebrochen werden, wenn sich eine Person in den Gefahrenbereich bewegt.

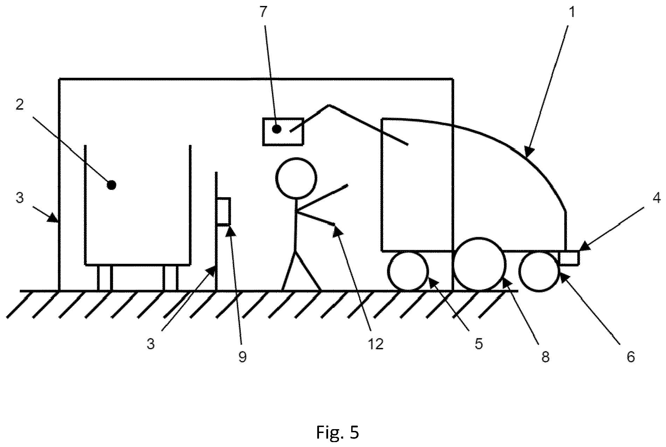

In Fig. 5 ist eine Person 12 dargestellt, die sich nach dem Anheben des Kehrgutbehälters 7 in den Gefahrenbereich der Servicestation begeben hat. Beim zurücksetzten des Roboters besteht die Gefahr diese zwischen dem Auffangbehälter 2 und dem Roboter einzuklemmen.

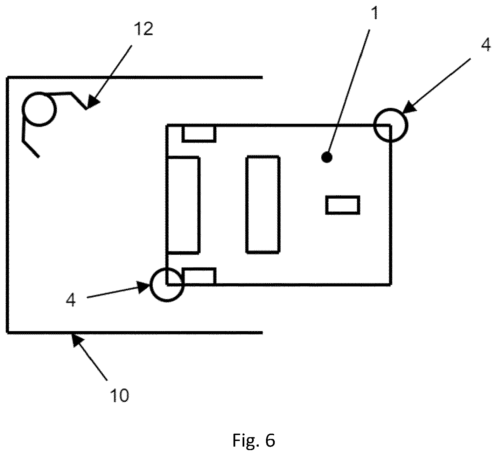

In Fig. 6 ist eine Person 12 dargestellt, die sich vor dem Anheben des Kehrgutbehälters 7 in den Gefahrenbereich der Servicestation begeben hat. Beim Anheben des Kehrgutbehälters 7 besteht die Gefahr, dass Gliedliedmaßen in dem Hubmechanismus eingeklemmt werden.

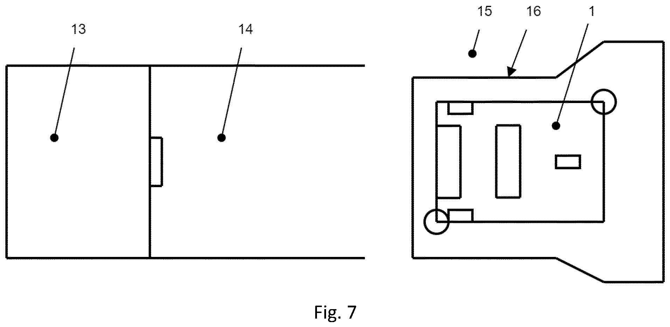

In Fig. 7 sind die drei Bereiche dargestellt, in denen der Roboter während des Betriebs agiert. Im hinteren Bereich 13 wird der Auffangbehälter 2 platziert, im vorderen Bereich 14 bewegt sich der Roboter während des Hebe- und Senkvorgangs des Kehrgutbehälters 7. In der Freifläche 15 wird die Sicherheit von Personen durch Schutzfelder 16 sichergestellt.

### Detailliertere Darstellung des Verfahrens

Die Servicestation lässt sich in mehrere Bereich einteilen. Im hinteren Bereich 13 wird der Auffangbehälter platziert. Bei diesem handelt es sich zum Beispiel um einen Müllcontainer nach DIN EN 840-2 mit einem Volumen von 1100 1. Dieser ist komplett von Schutzzäunen oder ähnlichen trennenden Schutzeinrichtungen umgeben. So wird durch bauliche Maßnahmen sichergestellt, dass sich keine Person in dem Bereich aufhalten kann, in dem der Müllcontainer platziert werden soll. Da zum Entleeren des Kehrgutbehälters der Roboter diesen über den Schmutzauffangbehälter bewegen muss, kann durch Sensoren nicht sichergestellt werden, dass keine Person eingeklemmt wird. Es wäre beispielsweise denkbar, dass sich eine Person an der Stelle des Müllcontainers oder in diesem befindet. Es sind keine Sensoren verfügbar, mit denen sich eine Person sicher von einem anderen Objekt unterscheiden lässt.

Sicher bezeichnet im Kontext der Maschinenrichtlinie 2006/42/EG ein Gerät, von dem im regulären Gebrauch und bei einer vernünftigerweise anzunehmenden Fehlanwendung keine Gefahr ausgehen kann. Beim Vorgang des Entleerens des Kehrgutbehälters treten insbesondere mechanische Gefahren durch offene, sich bewegende Bauteile auf. Das Risiko der Verletzung von Personen durch diese Gefahren wird durch die beschriebenen Verfahren und Vorrichtungen so weit gemindert, dass die Maschine als sicher gilt.

Im vorliegenden Fall wird durch eine mechanische Vorrichtung sichergestellt, dass sich keine Person im Bereich des Müllcontainers befinden kann, ohne dass die Kontur der Servicestation von einer Vorgabe abweicht. Liegen Abweichungen vor, werden keine gefährlichen Bewegungen wie das Anheben des Kehrgutbehälters durchgeführt und der Roboter verbleibt in einem sicheren Zustand.

Im Reinigungsbetrieb in der Freifläche 15 setzt der Roboter Schutzfelder 16 ein, die Kollisionen mit Personen sicher verhindern. Dabei handelt es sich um zweidimensionale Bereiche, die relativ zum Roboter durch Laser-Sensoren überwacht werden. Deren Größe ist abhängig von der aktuellen Fahrgeschwindigkeit und ergibt sich aus dem Anhalteweg des Roboters im Falle eine Gefahrenbremsung, die durch eine Verletzung des Schutzfelds ausgelöst wird. Die verwendeten Sicherheitslaserscanner müssen Personen innerhalb des Schutzfelds sicher erkennen. Dies wird durch den vom Hersteller angegeben Performance Level d nach ISO 13840 umgesetzt.

Eine Überwachung des gesamten Gefahrenbereichs während der Entleerung des Kehrgutbehälters durch am Roboter angebrachte Sensoren ist aus verschiedenen Gründen nicht möglich. Durch das Anheben des Kehrgutbehälters vergrößert sich die auf die Scanebene der Sicherheitslaserscanner projizierte Grundfläche des Roboters stark. Diese befindet sich auf einer Höhe von 18 cm. Zusätzlich muss von einem Übergreifen des Schutzfeldes durch Personen ausgegangen werden, wodurch das Schutzfeld weiter vergrößert werden muss. Dadurch ergibt sich ein besonders großer Gefahrenbereich, der, während dem gesamten Entladeprozesses komplett frei bleiben muss. Dies würde bedeuten, dass eine große Fläche rund um den Müllcontainer abgesperrt werden müsste.

Weiterhin überschneidet sich während der Bewegung des Kehrgutbehälters über den Auffangbehälter die auf die Scanebene projizierte Kontur des Roboters mit der Kontur des Müllcontainers. Durch den Einsatz von Schutzfeldern lässt sich deshalb keine ausreichende Risikominderung erreichen.

Des Weiteren wird durch den Müllcontainer der dahinterliegende Bereich verdeckt, sodass am Roboter angebrachte Sensoren nicht sicherstellen können, dass sich hinter dem Behälter keine Person befindet, die aus ihrer Position in die beweglichen Teile des Kehrgutbehälters greifen und sich verletzen kann.

Durch einen Mechanismus, der in der Abtrennung des Müllcontainers verbaut ist, lässt sich der Behälter zur Entleerung entnehmen. Gleichzeitig wird aber sichergestellt, dass die Kontur der Servicestation ausreichend stark verändert wird, während die Abtrennung geöffnet ist, sodass mithilfe der Sicherheitssensoren im Roboter festgestellt wird, dass nicht alle Voraussetzungen zur Durchführung eines sicheren Entladeprozesses gegeben sind. Die Abtrennung lässt sich nur verschließen, wenn sich der Bediener außerhalb des abgetrennten Bereichs 13 befindet, sodass eine geschlossene Abtrennung sicherstellt, dass sich keine Person im beschriebenen Gefahrenbereich befindet.

Neben der mechanischen Abtrennung des Bereichs 13, in dem der Müllcontainer sich befindet, lässt sich auch durch Sensoren sicherstellen, dass sich keine Person in diesem Gefahrenbereich aufhält. Denkbar wäre dazu beispielsweise eine Erkennung der Kontur des Müllcontainers durch Laserscanner, die in der Station angebracht sind oder eine Identifizierung des Behälters durch RFID-Technik. Diese Lösungen erfordern aber immer Steuerungstechnik innerhalb der Service-Station und eine sichere Kommunikation zwischen Servicestation und Roboter. Eine mechanische Abtrennung ist einfach und günstig realisierbar und bietet einen sehr guten Schutz. Zudem ist bei der gewählten Variante keine Kommunikation zwischen den Komponenten der Servicestation und dem Roboter erforderlich. Werden Sicherheitsfunktionen durch in der Station verbaute Elektronikkomponenten ausgeführt, müssen die von diesen eingelesenen Daten auf einem sicheren Kanal an den Roboter übertragen werden. Dies stellt einen zusätzlichen wirtschaftlichen Faktor dar.

Einen weiteren Bereich der Servicestation stellt der Bereich 14 dar, in dem sich der Roboter während dem Entlade- und Ladevorgang befindet. Dieser wird an zwei Seiten durch Schutzzäune und an einer Seite durch die Abtrennung zum Müllcontainer begrenzt. Eine besondere Gefahr geht hier während dem Anheben und Senken des Kehrgutbehälters von der dazu erforderlichen Mechanik aus. Diese bietet mehrere Quetschstellen, die sich funktionsbedingt nicht abdecken lassen. Aufgrund des hohen Gewichts des Kehrgutbehälters werden sehr starke Aktoren eingesetzt. Dabei handelt es sich um hydraulisch angesteuerte Zylinder, wobei elektrische Antriebe denselben Zweck erfüllen würden. Vergleichen mit den Kräften, die zum Anheben des Behälters nötig sind, wären die durch das Einklemmen von Gliedmaßen auftretenden Kräfte eher gering und schwer detektierbar. Die trennenden Schutzeinrichtungen, die diesen Bereich 14 abgrenzen sind so ausgeführt, dass sie von den Laserscannern detektiert werden können. Die verwendeten Schutzzäune werden dazu mit Blechtafeln versehen, die auf der Höhe der Scann-Ebene der Lasersensoren angebracht sind. Alle drei Abtrennungen bilden eine U-Form. Das Vorhandensein dieser wird vor dem Einleiten der gefährlichen Bewegungen mithilfe einer Konturenüberwachung der Sicherheitslaserscanner geprüft. Dabei wird mit vom Hersteller angegebenem Performance Level d nach ISO 13849 sichergestellt, dass sich die vom Laserscanner detektierte Kontur innerhalb eines definierten Bereichs relativ zu einer vorgegebenen Kontur befindet. Dieser Bereich ist so klein gewählt, dass sich keine Person innerhalb der Abtrennungen befinden kann, ohne dass die überwachte Kontur verletzt wird.

Nachdem sichergestellt wurde, dass sich keine Person innerhalb des Bereichs 14 befindet, in dem der Roboter agiert, werden die Bewegungen mit erhöhtem Gefahrenpotential gestartet. Da sich insbesondere während der Fahrbewegungen die Position der Abtrennung zwischen Roboter und Müllcontainer relativ zum Roboter verändert, ist eine Konturenüberwachung zu dieser nicht mehr möglich, nachdem die Bewegung eingeleitet wurde. Ab diesem Zeitpunkt wird lediglich die Kontur der beiden Seitenwände überwacht. Da zuvor sichergestellt wurde, dass sich keine Person im gesamten Bereich 14 befindet, ist es ausreichend die verbleibenden Zugänge zwischen Roboter und Schutzzaun zu überwachen. Betritt eine Person den Gefahrenbereich verletzt diese die Kontur der Seitenwand und führt zu einem sofortigen einnehmen eines sicheren Betriebszustands. In diesem sind alle Aktoren stromlos und es ist keine Bewegung mehr möglich.

Der Zustand lässt sich nur durch einen eingewiesenen Bediener auflösen, der den Roboter durch einen manuellen Eingriff zurück in einen sicheren Zustand versetzt.

Wird ein Eingriff des Bedieners an den Roboter erforderlich, um beispielsweise Aktionen auf dem Bedienfeld durchzuführen, wobei die Servicestation so gestaltet ist, dass sich keine Person zwischen Roboter und Schutzzaun bewegen kann, wäre eine Öffnung in Form einer Tür oder Klappe zu ergänzen. Da durch diese Personen den Gefahrenbereich ganz oder teilweise erreichen können, müsste diese so ausgeführt werden, dass sie im geöffneten Zustand die überwachte Kontur so verletzt, dass der Roboter alle gefährlichen Bewegungen einstellt und einen sicheren Zustand einnimmt. Dies ließe sich durch eine Tür erreichen, die bis zum Boden reicht und so konstruktionsbedingt die Kontur der Servicestation verletzt. Alternativ könnte eine kleine Klappe durch Bauteile ergänzt werden, die nach dem Öffnen eine entsprechende Veränderung der Kontur durch Ausschwenken hervorrufen. Eine Überwachung der Öffnung durch spezielle in der Station verbaute Sensoren würde eine Übermittlung der sicherheitsgerichteten Informationen zwischen Station und Roboter erforderlich machen.

### Bezugszeichenliste

- 1: Reinigungsroboter
- 2: Auffangbehälter
- 3: Trennende Schutzeinrichtung
- 4: Optische Sensoren
- 5: Mitlaufende Räder
- 6: Gelenktes Antriebsrad
- 7: Kehrgutbehälter
- 8: Reinigungseinheit
- 9: Ladetechnik
- 10: Kontur 1
- 11: Kontur 2
- 12: Person im Gefahrenbereich
- 13: Bereich 1
- 14: Bereich 2
- 15: Bereich 3 / Freifläche
- 16: Schutzfeld

## Patentansprüche

1. Verfahren zur automatisierten Entleerung von losem Transportgut aus einem Behälter (7), das vermittels eines selbstfahrenden Fahrzeugs (1) transportiert wird, in einen Auffangbehälter (2), **gekennzeichnet durch** die Schritte:
- Bereitstellen einer räumlich definierten Entladezone in einer Entladestation, die das selbstfahrende Fahrzeug (1) wenigstens einer Seite durch trennende Schutzeinrichtungen (3) aufzunehmen vermag und wenigstens in Teilbereichen umgibt,
- Sensieren der Entladezone vermittels an dem selbstfahrenden Fahrzeug (1) vorgesehenen Sensoren (4),
- Bewerten der Sensordaten zu einer Verfügbarkeitssituation der Entladezone und bei ermittelter Leere der Entladezone Einfahren des selbstfahrenden Fahrzeugs (1) in diese in eine definierte Position zur erwarteten Lage des Auffangbehälters (2),
- Anheben des Behälters (7) und verschwenken desselben vermittels einer Verschwenkvorrichtung über den Auffangbehälter und Entleeren des Behälters (7),
- mehrfaches Sensieren der Entladezone während des Anhebe- und Entleerungsvorgangs vermittels der an dem selbstfahrenden Fahrzeug (1) vorgesehenen Sensoren (4), und stoppen jeder Bewegung bei Feststellung einer Abweichung mit Ausnahme des selbstfahrenden Fahrzeugs (1) vom sonst leeren Zustand der Entladezone,
- Zurückbewegen des Behälters (7) durch die Verschwenkvorrichtung.

2. Verfahren nach Anspruch 1,
**dadurch gekennzeichnet, dass**
als Behälter insbesondere ein Kehrgutbehälter (7) gewählt wird und das Transportgut ein insbesondere loses Kehrgut ist, das von dem als Reinigungsroboter ausgebildeten selbstfahrenden Fahrzeug (1) in einem Reinigungsprozess aufgenommen und dann transportiert wurde.

3. Verfahren nach Anspruch 1 oder 2,
**dadurch gekennzeichnet, dass**
das Sensieren der Entladezone vermittels an dem selbstfahrenden Fahrzeug (1) vorgesehenen Sensoren (4) durch wenigstens zu einer Seite der Entladestation unter Feststellung deren Linienzugs insbesondere vermittels 2D-Laserscannern erfolgt,
hierbei wird die mittels Sensierung festgestellte Kontur der Entladezone mit einer gespeicherten zu erwartenden leeren Kontur verglichen und entsprechend eine Verfügbarkeitssituation positiv festgestellt, wenn keine Abweichungen vorliegen,
insbesondere wird dieser Vorgang mehrfach wiederholt.

4. Verfahren nach Anspruch 1, 2 oder 3,
**dadurch gekennzeichnet, dass**
neben der Entleerung des Kehrgutbehälters (7) die Aufladung der Akkumulatoren des Reinigungsroboters (1) durch eine Ladevorrichtung ermöglicht ist, hierzu ist es vorgesehen nach der Entleerung des Kehrgutbehälters (7), den Roboter in der Parkposition zu belassen, in welcher vorteilhafterweise die Aufladung stattfindet.

5. Entladestation zur automatisierten Entleerung von losem Transportgut aus einem Behälter (2) eines selbstfahrenden Fahrzeugs (1) in einen Auffangbehälter (7), insbesondere nach einem Verfahren der Ansprüche 1 bis 4,
**dadurch gekennzeichnet, dass**
das selbstfahrende Fahrzeug (1) ein Reinigungsroboter (1) ist, der einen mitgeführten Behälter in einem Reinigungsprozess mit Kehrgut befüllt,
wobei an der Entladestation der Auffangbehälter (2) in einer definierten Position gehalten ist, und der Reinigungsroboter (1) an den Auffangbehälter (2) in einer räumlich definierten Entladezone heranfahren kann,
wobei die definierten Entladezone durch eine Fläche, die an wenigstens einer Seite durch trennende Schutzeinrichtungen (3), insbesondere in Form eines Zauns oder einer Trennwand, durch eine Stirnseitenbegrenzung und Seitenbegrenzungen begrenzt ist, definiert ist.
